# EUROPÄISCHE PATENTSCHRIFT

(11) **EP 2 518 335 B1**
(45) Veröffentlichungstag und Bekanntmachung des Hinweises auf die Patenterteilung: **15.01.2014**
(21) Anmeldenummer: 12005478.8
(22) Anmeldetag: 05.09.2007
(51) Int. Cl.: F16B 5/06, B60R 21/213, B60R 21/217, B60R 21/232, B60R 21/231

(54) **Befestigungsclip, zur Befestigung eines Airbagmoduls in einem Fahrzeug, sowie Verfahren zur Befestigung eines Airbagmoduls**
Clip on element for fixation of an airbag modul and a method for attachment of an airbag modul
Clip élément pour la fixation d'un module d'airbag et une méthode pour la fixation d'un module d'airbag

(30) Priorität: 07.09.2006 DE 102006041924
(43) Veröffentlichungstag der Anmeldung: 31.10.2012
(62) Teilanmeldung aus: 07802149.0
(73) Patentinhaber: Volkswagen Aktiengesellschaft, 38440 Wolfsburg (DE)
(72) Erfinder: Kahl, Martin, 38124 Braunschweig (DE)

(56) Entgegenhaltungen:
- EP-A- 0 855 316
- DE-A1-102005 045 923
- DE-U1-202006 000 846
- US-A- 2 692 414

## Beschreibung

Die Erfindung betrifft einen Befestigungsclip, insbesondere zur Befestigung eines Airbagmoduls in einem Fahrzeug, nach dem Oberbegriff des Patentanspruches 1 sowie ein Verfahren zur Befestigung eines Airbagmoduls nach dem Patentanspruch 18.

Bei der Airbagbefestigung im Fahrzeug ist es im Großserieneinsatz von wesentlicher Bedeutung, die Airbagmodule in geringer Montagezeitdauer prozesssicher an der Fahrzeugkarosserie zu befestigen.

So ist aus der WO 2006/026956 A1 ein als Rastelement ausgebildeter Befestigungsclip bekannt, der im montierten Zustand mit einer Montageöffnung einer fahrzeugseitigen Trägerwand lösbar verrastet ist und diese hintergreift. Das Rastelement ist als ein einstückiges Blechformteil gebildet, das im montierten Zustand eine Befestigungslasche einer Airbaghülle des Airbagmoduls am Rohbaublech des Fahrzeugs hält. Das Blechformteil ist herstellungsbedingt scharfkantig ausgebildet, so dass sowohl bei der Airbagmontage als auch bei Aktivierung des Airbags die Gefahr einer Beschädigung der Airbaghülle besteht.

Ein Befestigungsclip nach der Präambel von Anspruch 1 sowie 18 ist aus der DE202006000846 U1 bekannt.

Die Aufgabe der Erfindung besteht darin, einen Befestigungsclip sowie ein Befestigungsverfahren bereitzustellen, bei dem eine prozesssichere Airbagbefestigung in reduzierter Montagezeit sowie eine einfache Demontage erfolgen kann.

Die Aufgabe ist durch die Merkmale des kennzeichnenden Teils des Patentanspruchs 1 sowie des Patentanspruchs 18 gelöst. Vorteilhafte Weiterbildungen der Erfindung sind in den Unteransprüchen offenbart.

Gemäß dem kennzeichnenden Teil des Patentanspruches 1 ist dem Befestigungsclip ein Schutzschild zugeordnet, das das Rastelement frontseitig zumindest teilweise überdeckt. Durch das Schutzschild ist der Airbag sowohl bei der Entfaltung als auch bei dessen Montage bzw. Demontage vor den scharfen Kanten des Rastelements geschützt. Andererseits dient das Schutzschild bei der Montage als Handhabe, mit deren Hilfe das Rastelement in seine Rastposition in die fahrzeugseitige Trägerwand gedrückt wird und damit prozesssicher verrastet.

Bevorzugt kann das Schutzschild das Rastelement zusammen mit seinem Entriegelungsmittel überdecken. Das Entriegelungsmittel des Rastelements erstreckt sich bei montiertem Rastelement durch die Montageöffnung zur Frontseite der Trägerwand, um eine einfache Demontage des Befestigungsclips zu ermöglichen. Bevorzugt ist das Entriegelungsmittel materialeinheitlich mit dem als Blechformteil gebildeten Rastelement ausgebildet.

Für eine prozesssichere Halterung des Airbagmoduls an der Fahrzeugkarosserie weist das Rastelement elastisch biegbare Rastschenkel auf. Diese hintergreifen im montierten Zustand die Montageöffnung der fahrzeugseitigen Trägerwand. Die freien Enden der Rastschenkel können als Entriegelungsmittel durch die Montageöffnung zur Frontseite der Trägerwand geführt sein. Auf diese Weise kann in einfacher Weise frontseitig das Entriegelungsmittel zur Demontage des Befestlgungsclips betätigt werden. Eine solche Demontage kann erfolgen, wenn die gegenüberliegenden freien Enden der Rastschenkel entgegen einer Federkraft zusammengedrückt werden, so dass das Rastelement mit seinen Rastschenkeln ohne weiteres aus der Montageöffnung der Trägerwand entfernbar ist.

Vorteilhaft können die Rastschenkel des Rastelements im Montagezustand mit einer Federkraft gegen den Öffnungsrand der Montageöffnung drücken. Beim Einrasten des Befestigungsclips in der Trägerwand schlagen die Rastschenkel daher mit einem hörbaren Klickgeräusch gegen den Öffnungsrand der trägerwandseitigen Montageöffnung. Auf diese Weise erfolgt bei fehlerfreier Montage des Befestigungsclips eine akustische Bestätigung.

Erfindungsgemäß kann eine optische Erkennung einer Fehl- bzw. Scheinverrastung des Rastelements an der Trägerwand bereitgestellt sein. Hierzu können die Entriegelungsmittel bei richtig montiertem Rastelement das Schutzschild mit einem Soll-Übermaß seitlich überragen. Dadurch ist in einfacher Weise ein einwandfreier Montagezustand des Rastelements erkennbar. Im Falle einer Scheinverrastung können die Entriegelungsmittel vollständig vom Schutzschild überdeckt sein bzw. das Schutzschild mit einem Übermaß überragen, das sich vom oben genannten Soll-Übermaß unterscheidet. Auf diese Weise ist ein Fehlverbau des Airbagmoduls an der Fahrzeugkarosserie einfach feststellbar.

Für eine einfach Demontage können die Entriegelungsmittel Werkzeugansätze mit z. B. Demontageösen aufweisen. Die Werkzeugansätze der Entriegelungsmittel können erfindungsgemäß zudem zur einfacheren Erfassung einer Scheinverrastung der Rastelemente eingesetzt werden. Hierzu können bevorzugt die Demontageösen der Werkzeugansätze bei fehlerfreier Verrastung vom Schutzschild freigelegt sein: Demgegenüber können die Demontageösen bei einer Scheinverrastung zumindest teilweise vom Schutzschild überdeckt sein.

Zur Halterung des Airbagmoduls an der Trägerwand kann das Rastelement zumindest einen frontseitigen Anschlag aufweisen, zwischen dem und den Rastschenkeln der Öffnungsrand der Montageöffnung geklemmt ist. Das Airbagmodul ist somit zwischen dem frontseitig auf die Trägerwand drückenden Anschlag und den rückseitig die Trägerwand-Montageöffnung hintergreifenden Rastschenkeln eingespannt. Dabei kann das Rastelement zusammen mit seinem Anschlag und dem Entriegelungsmittel vom Schutzschild zumindest teilweise überdeckt sein.

Für eine prozesssichere Halterung des Airbagmoduls kann der Befestigungsclip zweiteilig mit einem Haltebügel und dem bereits erwähnten Rastelement ausgebildet sein. Der Haltebügel umgreift das Airbagmodul und kann mittels des Rastelements an der Trägerwand befestigt werden. Der Haltebügel kann bevorzugt ein welches Kunststoffteil sein, um ggf. eine Beschädigung des Airbags während der Montage bzw. bei dessen Entfaltung zu vermeiden.

Im Sinne einer Bauteilreduzierung ist es dabei von Vorteil, wenn das Schutzschild als eine Lasche materialeinheitlich und einstückig mit im Haltebügel ausgeführt ist. Der Haltebügel kann bevorzugt einen Zylinderabschnitt aufweisen, durch den das Airbagmodul geführt ist Der Zylinderabschnitt kann wiederum radial nach außen vorstehende Befestigungsflansche aufweisen, die einander gegenüberliegen und mittels des Rastelements an der fahrzeugseitigen Trägerwand befestigbar sind.

Der Zylinderabschnitt des Haltebügels begrenzt einen Freiraum, durch den das Airbagmodul geführt ist. In einer Grundausführung des Haltebügels kann das Schutzschild zumindest teilweise in diesen Freiraum hineinragen. Beim Einsetzen des Airbagmoduls in den Zylinderabschnitt des Haltebügels drückt das Airbagmodul das Schutzschild elastisch aus dem Freiraum des Zylinderabschnitts. Dadurch wird das Schutzschild in Überdeckung mit dem Anschlag und dem Entriegelungsmittel des Rastelements gebracht.

Die Befestigungsflansche des Haltebügels können einander gegenüberliegende Öffnungen aufweisen, durch die das Rastelement bei der Wandmontage führbar ist. Das im Haltebügel gehaltene Airbagmodul kann eine Befestigungslasche aufweisen, die zwischen den Befestigungsflanschen des Haltebügels angeordnet und durch die das Rastelement bei der Wandmontage führbar ist.

Damit sich der Airbag nach seiner Aktivierung frei entfalten kann, kann der Haltebügel bevorzugt eine Sollbruchstelle aufweisen, die bei der Entfaltung des Airbags reißt. Auf diese Weise kann sich der Haltebügel auseinander spreizen, so dass sich der Airbag ungehindert in seine Betriebsposition entfaltet. Das Rastelement verbleibt dabel mittels des Schulzschilds berührungsfrei gegenüber dem sich entfaltenden Airbag.

Bei der Befestigung des Airbagmoduls mit dem oben genannten Befestigungsclip wird zunächst die Befestigungslasche des Airbagmoduls zwischen den beiden Befestigungsflanschen des Haltebügel angeordnet. Anschließend wird das Rastelement des Befestigungsclips durch die übereinander liegenden Öffnungen der gegenüberliegenden Befestigungsflansche sowie der zwischengeordneten Befestlgungslasche des Airbags geführt. Das Rastelement wird dann mitsamt dem Haltebügel in die Montageöffnung der fahrzeugseitigen Trägerwand verrastet.

Nachfolgend ist ein Ausführungsbeispiel der Erfindung anhand der beigefügten Figuren gezeigt.

Es zeigen:
- Fig. 1: in einer perspektivischen Ansicht einen aus einem Haltebügel und einem Rastelement bestehenden Befestigungsclip;
- Fig. 2: in einer Seitenschnittansicht entlang der Linie I-I aus der Fig. 1 den Befestigungsclip im montierten Zustand; und
- Fig. 3 und 4: jeweils Ansichten des Befestigungsclips entlang der Linie II-II aus der Fig. 1 in einer fehlerfreien Verrastung und in einer Scheinverrastung.

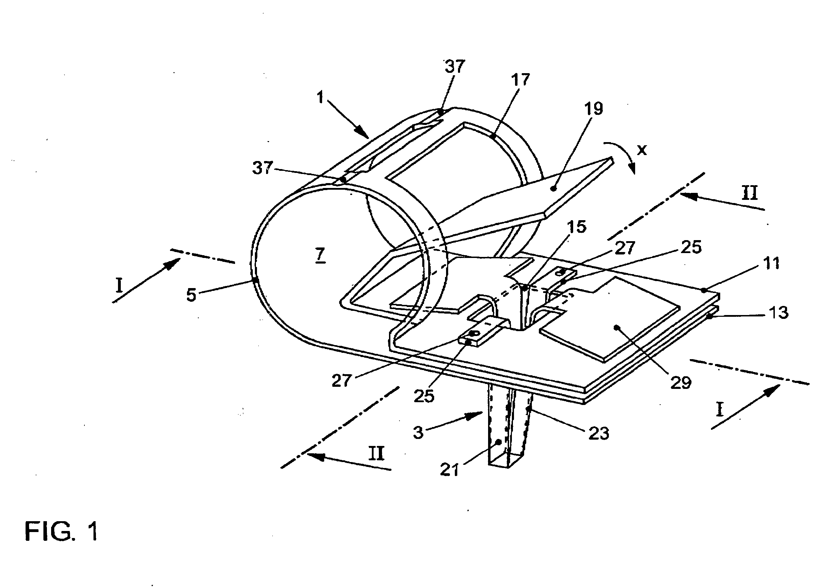

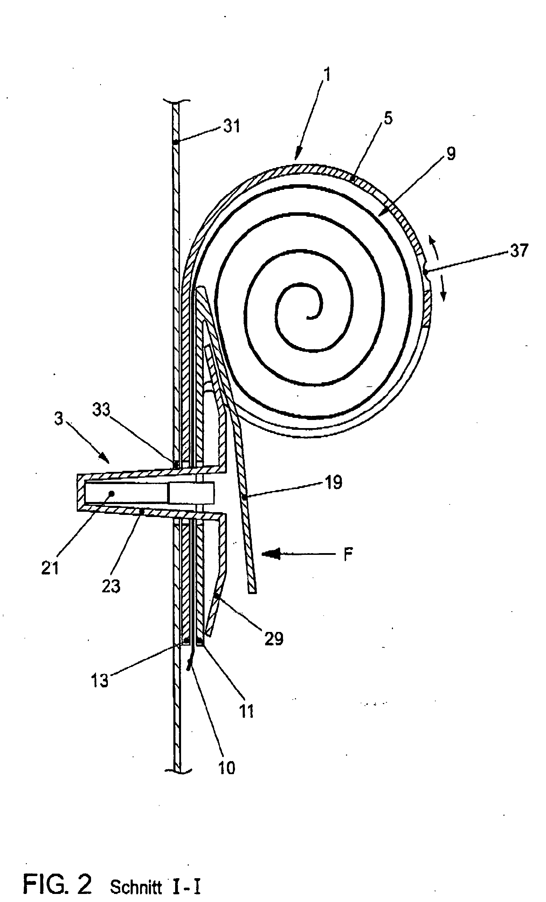

In der Fig. 1 ist ein Befestigungsclip in Alleinstellung gezeigt. Der Betestigungsclip ist zweiteilig aus einem Haltebügel 1 sowie einem Rastelement 3 ausgeführt, das ein Blechformteil ist. Der Haltebügel 1 ist aus welchem Kunststoff gefertigt und weist nach Art einer Rohrschelle einen Zylinderabschnitt 5 auf, der einen Freiraum 7 begrenzt, durch den das in der Fig. 2 schematisch dargestellte Airbagmodul 9 führbar ist. Am Zylinderabschnitt 5 des Haltebügels 1 sind radial nach außen vorstehende Befestigungsflansche 11, 13 angeformt, die einander mit geringfügigem Abstand gegenüberliegen. Die beiden Befestigungsflansche 11, 13 des Haltebügels 1 weisen übereinander liegende, rechtwinklige Öffnungen 15 auf, durch die das später beschriebene Rastelement 3 geführt ist.

Wie aus der Fig. 1 hervorgeht, ist In dem Zylinderabschnitt 5 des Haltebügels 1 eine rechtwinklige Ausnehmung 17 eingeschnitten, aus der eine V-förmige Lasche 19 herausgebogen ist, die mit ihrer Spitze In den Freiraum 7 ragt. Entsprechend ragt ein freier Schenkel der V-förmigen Lasche 19 schräg angestellt durch die Ausnehmung 17 des Zylinderabschnitts 5, während der andere Schenkel der Lasche 19 in den Befestigungsflansch 11 übergeht.

Durch die einander gegenüberliegenden Öffnungen 15 der Befestigungsflansche 11, 13 des Haltebügels 1 ist gemäß der Fig. 1 das Rastelement 3 mit seinem Schaft geführt. Der Schaft des Rastelements 3 weist vier umfangsseitig angeordnete Blechstreifen 21, 23 auf, die stirnseitig zu einer geschlossenen Schaftspitze zusammengeführt sind. Die der Schaftspitze gegenüberliegenden Enden 25, 29 der Blechstreifen 21, 23 sind in Fig. 1 oberseitig auf dem Befestigungsflansch 11 des Haltebügels 1 angeordnet. Dabei weisen die gegenüberliegenden Blechstreifen 21 rechtwinklig abgewinkelte Enden 25 auf, die mit ihren Demontageöffnungen 27 als Werkzeugansätze zur später beschriebenen Demontage des Rastelements 3 dienen. Demgegenüber sind die freien Enden 29 der gegenüberliegenden Blechstreifen 23 als plattenförmige Anschlagplatten 29 In Anlage mit der Oberseite des Befestigungsflansches 11.

Die beiden Anschlagplatten 29 des Rastelements 3 sind dabei geringfügig zueinander schräg gestellt, um das Rastelement nach erfolgter Montage gegenüber einer Trägerwand 31 geringfügig vorzuspannen, wie es später noch beschrieben ist.

In der Fig. 2 ist der aus dem Haltebügel 1 und dem Rastelement 3 bestehende Befestigungsclip in seinem montierten Zustand gezeigt, in dem der Befestigungsclip den zusammengerollten Airbag mittels des Befestigungsclips an einer vertikalen Karosseriewand 31 des Fahrzeugs befestigt ist. Der in der Fig. 2 gezeigte Montagezustand ist mit den folgenden Arbeitsschritten erreichbar: Zunächst wird ausgehend von der Fig. 1 der Airbag durch den Freiraum 7 des Zyllnderabschnitts 5 des Haltebügels 1 geführt. Dies erfolgt unter elastischer Verstellung der Schutzlasche 19 in Richtung auf das Rastelement 3, wie es mit dem Pfeil x aus der Fig. 1 angedeutet ist. Die elastisch verstellte Lasche 19 überdeckt die scharfkantigen Anschlagplatten 29 sowie die Werkzeugansätze 25 des Rastelementes 3, wie es in den Fig. 2 bis 4 gezeigt ist.

Wie den Fig. 2 bis 4 weiter zu entnehmen ist, ist eine Befestigurlgslasche 10 des Airbags zwischen den beiden Befestigungsflanschen 11 und 13 angeordnet, so dass der Schaft des Rastelements 3 sowohl durch die gegenüberliegenden rechteckförmigen Öffnungen 15 der Flansche 11, 13 als auch durch eine Ausnehmung in der Befestigungslasche des Airbags geführt ist.

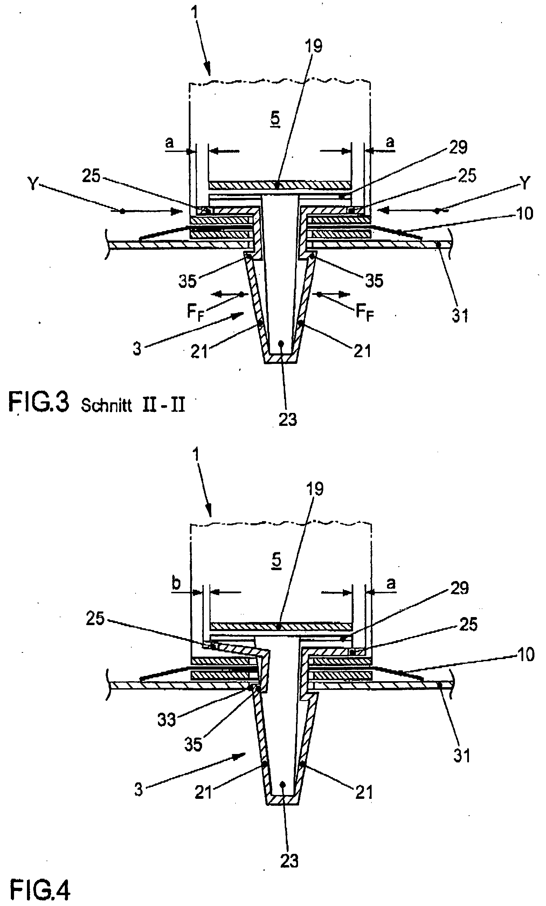

Zur Befestigung des Airbagmoduls 9 an der in der Fig. 2 gezeigten vertikalen Trägerwand 31 des Fahrzeugs wird das Rastelement 3 mit seinem Schaft durch eine Montageöffnung 33 der Trägerwand 31 geführt, wodurch sich die in den gegenüberliegenden Blechstreifen 21 gebildeten Rastnasen 35 entgegen einer Federkraft F_{F} zusammen gedrückt werden und nach erfolgter Montage den Rand der Montageöffnung 33 hintergreifen, wie es in der Fig. 3 gezeigt ist. Gemäß der Fig. 3 ist der Haltebügel 5 mit seinen Befestigungsflanschen 11, 13 zwischen der Trägerwand 31 sowie den Anschlagplatten 29 des Rastelements 3 eingeklemmt.

Wie oben erwähnt, werden bei der Wandmontage die gegenüberliegenden Rastnasen 35 der Befestigungsstreiten 21 entgegen einer Federkraft F_{F} aufeinander zubewegt. Hierzu ist gemäß der Fig. 2 eine auf die Lasche 19 aufbringbare Betätigungskraft F erforderlich. Die Betätigungskraft F wird dabei über die Schutzlasche 19 auf die beiden elastisch abgestützten Anschlagplatten 29 des Rastelements 3 aufgebracht. Die Schutzlasche 19 dient daher zur Montageerleichterung als eine Handhabe zur Aufbringung der Betätigungskraft F auf das Rastelement 3.

In der Fig. 3 ist entlang der Schnittlinie II-II aus der Fig. 1 der Montagezustand bei einer fehlerfreien Verrastung des Rastelements 3 in der Montageöffnung 33 der Trägerwand 31 gezeigt. Daraus geht hervor, dass die Schutzlasche 19 das Rastelement 3 mit seinen Anschlagplatten 29 sowie mit seinen Werkzeugansätzen 25 nahezu vollständig überdeckt. Gemäß der Fig. 3 überragen lediglich die Werkzeugansätze 25 mit einem Soll-Übermaß a seitlich die Lasche 19. Die Demontageösen 27 sind dabei teilweise freigelegt. Die fehlerfreie Verrastung des Rastelements 3 in der Montagewand 31 ist daher in einfacher welse erkennbar. Im Gegensatz dazu ist in der Fig. 4 eine Scheinverrastung des Rastelements 3 in der Trägerwand 31 dargestellt, wonach die in der Fig. 4 linke Rastnase 35 nicht den Rand der Montageöffnung 33 hintergreift, sondern gegen den Öffnungsrand drückt. Die in der Fig. 4 rechte Rastnase 35 ist demgegenüber ordnungsgemäß verrastet. Aufgrund der dargestellten Scheinverrastung ragt der Werkzeugansatz 25 linksseitig lediglich mit einem Übermaß b seitlich über die Schutzlasche 19, während der rechtsseitige Werkzeugansatz 25 mit dem Soll-Übermaß 29 die Lasche 19 überragt. Es ist daher in einfacher Weise optisch erkennbar, dass das Rastelement 3 des Befestigungsclips lediglich einseitig verrastet und entsprechend in einem zusätzlichen Arbeitsgang fehlerfrei zu verrasten ist.

Für eine Demontage des an der fahrzeugseitigen Trägerwand 31 befestigten Airbags 9 ist zunächst die Lasche 19 vom Rastelement 3 wegzuklappen. Auf diese Weise sind die Werkzeugansätze 25 mit Ihren Demontageöffnungen 27 freigelegt, die mit einem her-kömmlichen Werkzeug, etwa einer Segerringzange, in Eingriff bringbar sind. Durch Zusammendrücken der beiden Werkzeugansätze 25 kann der Schaft des Rastelements 3 mit seinen nunmehr gelösten Rastnasen 35 durch die wandseitige Montageöffnung 33 geführt werden.

Wie aus der Fig. 1 oder 2 hervorgeht, weist der Zylinderabschnitt 5 des Haltebügels 1 umfangsseitig eine Materialsicke 37 auf, die als eine Sollbruchstelle wirkt. Bei einer Aktivierung des Airbags reißt die Sollbruchstelle 37 in den gemäß der Fig. 2 gezeigten Pfeilrichtungen auseinander unter einem Auseinanderspreizen der beiden Hälften des Zylinderabschnitts 5. Der Airbag 9 kann sich daher widerstandsfrei vertikal nach unten entfalten. Die Schutzlasche 19 dient dabei als Schutzschild für den sich entfaltenden Airbag, so dass der Airbag sich berührungsfrei gegenüber den scharfkantigen Anschlagplatten 29 sowie den Werkzeugansätzen 25 des Rastelements 3 entfaltet.

### Bezugszeichenliste

- 1: Haltebügel
- 3: Rastelement
- 5: Zylinderabschnitt
- 7: Frelraum
- 9: Airbagmodul
- 11: Befestigungsflansch
- 13: Belestigungsflansch
- 15: Öffnungen
- 17: Ausnehmung
- 19: Lasche
- 21: Blechstreifen
- 23: Blechstreifen
- 25: Werkzeugansätze
- 27: Demontageöffnungen
- 29: Anschlagplatten
- 31: Trägerwand
- 33: Montageöffnungen
- 35: Rastnasen
- 37: Sollbruchstelle

## Patentansprüche

1. Befestigungsclip, insbesondere zur Befestigung eines Airbagmoduls (9) an einer Trägerwand (31) eines Fahrzeugs, wobei der Befestigungsclip zumindest ein Rast-element (3) aufweist, das im montierten Zustand eine Montageöffnung (33) der Trägerwand (31) hintergreift, und dass dem Befestigungsclip ein Schutzschild (19) zugeordnet ist, das das Rastelement (3) frontseitig zumindest teilweise überdeckt, wobei der Befestigungsclip zweiteilig mit einem Haltebügel (1) zur Halterung des Airbagmoduls (9) und mit dem Rastelement (3) ausgebildet ist und der Haltebügel (1) einen Zylinderabschnitt (5) aufweist, der das Airbagmodul (9) umgreift und radial nach außen vorstehende Befestigungsflansche (11,13) aufweist,
**dadurch gekennzeichnet, dass** im demontierten Zustand das Schutzschild (19) zumindest teilweise in den vom Zylinderabschnitt (5) des Haltebügels (1) begrenzten Freiraum (7) ragt, und vom im Zylinderabschnitt (5) eingesetzten Airbagmodul (9) elastisch aus dem Freiraum (7) gedrückt ist.

2. Befestigungsclip nach Anspruch 1, **dadurch gekennzeichnet, dass** das Rastmittel (3) Entriegelungsmittel (25) aufweist, die sich im montierten Zustand durch die Montageöffnung (33) zur Frontseite der Trägerwand (31) erstrecken und vom Schutzschild (19) überdeckt sind.

3. Befestigungsclip nach Anspruch 1 oder Anspruch 2, **dadurch gekennzeichnet, dass** das Rastelement (3) elastisch biegbare Rastschenkel (21) aufweist, deren freie Enden (25) als Entriegelungsmittel im montierten Zustand durch die Montageöffnung (33) zur Frontseite der Trägerwand (31) geführt sind.

4. Befestigungsclip nach einem der vorhergehenden Ansprüche, **dadurch gekennzeichnet, dass** im Montagezustand die Rastschenkel (21) des Rastelements (3) mit einer Federkraft (F_{F}) gegen den Öffnungsrand der Montageöffnung (33) drücken.

5. Befestigungscip nach einem der Ansprüche 3 oder 4 **dadurch gekennzeichnet, dass** die Entriegelungsmittel (25) bei montiertem Rastelement (3) das Schutzschild (19) mit einem Soll-Übermaß (a) seitlich überragen.

6. Befestigungsclip nach Anspruch 5, **dadurch gekennzeichnet, dass** bei einer fehlerhaften Verrastung des Rastelements (3) in der Trägerwand (31) die Entriegelungsmittel (25) das Schutzschild (19) mit einem Übermaß (b) überragen, das sich vom das Soll-Übermaß (a) unterscheidet.

7. Befestigungsclip nach einem der Ansprüche 2 bis 6, **dadurch gekennzeichnet, dass** die Entriegelungsmittel (25) einen Werkzeugansatz, etwa Demontageösen, aufweisen, die vorzugsweise das Schutzschild (19) bei einer fehlerhaften Verrastung zumindest teilweise überdeckt und bei fehlerfreier Verrastung vom Schutzschild (19) freigelegt sind.

8. Befestigungsclip nach einem der vorhergehenden Ansprüche, **dadurch gekennzeichnet, dass** das Rastelement (3) zumindest einen frontseitigen Anschlag (29) aufweist, zwischen dem und dem Rastelement (3) der Öffnungsrand der Montageöffnung (33) geklemmt ist.

9. Befestigungsclip nach Anspruch 8, **dadurch gekennzeichnet, dass** der Anschlag (29) des Rastelements (3) zusammen mit dem Entriegelungsmittel (25) des Rastelements (3) von dem Schutzschild (19) zumindest teilweise überdeckt ist.

10. Befestigungsclip nach einem der vorhergehenden Ansprüche, **dadurch gekennzeichnet, dass** das Schutzschild (19) als eine Lasche (19) materialeinheitlich und einstückig mit dem Haltebügel (1) ausgeführt ist.

11. Befestigungsclip nach einem der vorhergehenden Ansprüche, **dadurch gekennzeichnet, dass** die Befestigungsflansche (11, 13) einander gegenüberliegende Öffnungen (15) aufweisen, durch die das Rastelement (3) führbar ist.

12. Befestigungsclip nach Anspruch 11, **dadurch gekennzeichnet, dass** das Airbagmodul (9) eine Befestigungslasche (10) aufweist, die zwischen den Befestigungsflanschen (11, 13) des Haltebügels (1) geklemmt ist und durch die das Rastelement (3) geführt ist.

13. Befestigungsclip nach einem der vorhergehenden Ansprüche, **dadurch gekennzeichnet, dass** der Haltebügel (1) eine Sollbruchstelle (37) aufweist, die bei Aktivierung des Airbagmoduls (9) reißt.

14. Befestigungsclip nach einem der vorhergehenden Ansprüche, **dadurch gekennzeichnet, dass** das Airbagmodul (9) ein Kopfairbagmodul ist.

15. Verfahren zur Befestigung eines Airbagmoduls (9) an einer Trägerwand (31) eines Fahrzeugs mit einem Befestigungsclip nach einem der vorhergehenden Ansprüche, in welchem Verfahren eine Befestigungslasche (10) des Airbagmoduls (9) zwischen zwei Befestigungsflanschen (11, 13) eines Haltebügels (1) angeordnet wird, durch die Befestigungsflanshe (11, 13) sowie die Befestigungslasche (10) ein Rastelement (3) geführt wird, und das Rastelement (3) mitsamt dem Haltebügel (1) in einer Montageöffnung (33) einer fahrzeugseitigen Trägerwand (31) verrastet wird.

## Claims

1. Fastening clip, in particular for fastening an airbag module (9) to a supporting wall (31) of a vehicle, wherein the fastening clip has at least one latching element (3) which engages in the mounted state behind a mounting opening (33) in the supporting wall (31), and wherein the fastening clip is assigned a protective shield (19) which at least partially covers the latching element (3) at the front, wherein the fastening clip is formed in two parts with a holding bracket (1) for holding the airbag module (9) and with the latching element (3) and the holding bracket (1) has a cylindrical portion (5) which engages around the airbag module (9) and has radially outwardly protruding fastening flanges (11, 13), **characterized in that** in the removed state the protective shield (19) projects at least partially into the free space (7) bounded by the cylindrical portion (5) of the holding bracket (1), and is pushed elastically out of the free space (7) by the airbag module (9) inserted into the cylindrical portion (5).

2. Fastening clip according to Claim 1, **characterized in that** the latching means (3) has unlocking means (25) which extend in the mounted state through the mounting opening (33) to the front side of the supporting wall (31) and are covered by the protective shield (19).

3. Fastening clip according to Claim 1 or Claim 2, **characterized in that** the latching element (3) has elastically flexible latching limbs (21), the free ends (25) of which are guided as unlocking means in the mounted state through the mounting opening (33) to the front side of the supporting wall (31).

4. Fastening clip according to one of the preceding claims, **characterized in that** in the mounted state the latching limbs (21) of the latching element (3) press against the opening rim of the mounting opening (33) with a spring force (F_{F}).

5. Fastening clip according to one of Claims 3 and 4, **characterized in that** the unlocking means (25) project laterally beyond the protective shield (19) by a desired excess length (a) when the latching element (3) is mounted.

6. Fastening clip according to Claim 5, **characterized in that**, when the latching element (3) is incorrectly latched in the supporting wall (31), the unlocking means (25) project beyond the protective shield (19) by an excess length (b) that differs from the desired excess length (a).

7. Fastening clip according to one of Claims 2 to 6, **characterized in that** the unlocking means (25) have a tool attachment, for instance removal eyelets, which preferably at least partially cover the protective shield (19) in the case of incorrect latching and are exposed by the protective shield (19) in the case of correct latching.

8. Fastening clip according to one of the preceding claims, **characterized in that** the latching element (3) has at least a front-side stop (29), between which and the latching element (3) the opening rim of the mounting opening (33) is clamped.

9. Fastening clip according to Claim 8, **characterized in that** the stop (29) on the latching element (3), together with the unlocking means (25) of the latching element (3), is at least partially covered by the protective shield (19).

10. Fastening clip according to one of the preceding claims, **characterized in that** the protective shield (19) is configured as a tab (19) which is materially integral and in one piece with the holding bracket (1).

11. Fastening clip according to one of the preceding claims, **characterized in that** the fastening flanges (11, 13) have mutually opposite openings (15), through which the latching element (3) is guidable.

12. Fastening clip according to Claim 11, **characterized in that** the airbag module (9) has a fastening tab (10), which is clamped between the fastening flanges (11, 13) of the holding bracket (1) and through which the latching element (3) is guided.

13. Fastening clip according to one of the preceding claims, **characterized in that** the holding bracket (1) has a predetermined breaking point (37) which tears when the airbag module (9) is activated.

14. Fastening clip according to one of the preceding claims, **characterized in that** the airbag module (9) is a head airbag module.

15. Method for fastening an airbag module (9) to a supporting wall (31) of a vehicle, having a fastening clip according to one of the preceding claims, in which method a fastening tab (10) of the airbag module (9) is arranged between two fastening flanges (11, 13) of a holding bracket (1), a latching element (3) is guided through the fastening flanges (11, 13) and the fastening tab (10), and the latching element (3) is latched, together with the holding bracket (1), in a mounting opening (33) in a supporting wall (31) of the vehicle.

## Revendications

1. Clip de fixation, notamment pour la fixation d'un module d'airbag (9) sur une paroi de support (31) d'un véhicule, le clip de fixation présentant au moins un élément d'encliquetage (3) qui, dans l'état monté, vient en prise par l'arrière avec une ouverture de montage (33) de la paroi de support (31), et un écran de protection (19) étant associé au clip de fixation, lequel recouvre l'élément d'encliquetage (3) au moins en partie du côté avant, le clip de fixation étant réalisé en deux parties avec un étrier de retenue (1) pour retenir le module d'airbag (9) et avec l'élément d'encliquetage (3) et
l'étrier de retenue (1) présentant une portion cylindrique (5) qui vient en prise autour du module d'airbag (9) et qui présente des brides de fixation (11, 13) saillant radialement vers l'extérieur,
**caractérisé en ce que** dans l'état démonté, l'écran de protection (19) pénètre au moins en partie dans l'espace libre (7) limité par la portion cylindrique (5) de l'étrier de retenue (1), et est pressé élastiquement hors de l'espace libre (7) par le module d'airbag (9) inséré dans la portion cylindrique (5).

2. Clip de fixation selon la revendication 1, **caractérisé en ce que** l'élément d'encliquetage (3) présente des moyens de déverrouillage (25), qui s'étendent dans l'état monté à travers l'ouverture de montage (33) vers le côté avant de la paroi de support (31) et qui sont recouverts par l'écran de protection (19).

3. Clip de fixation selon la revendication 1 ou la revendication 2, **caractérisé en ce que** l'élément d'encliquetage (3) présente des branches d'encliquetage élastiquement flexibles (21) dont les extrémités libres (25) sont guidées sous forme de moyens de déverrouillage dans l'état monté à travers l'ouverture de montage (33) vers le côté avant de la paroi de support (31).

4. Clip de fixation selon l'une quelconque des revendications précédentes, **caractérisé en ce que** dans l'état de montage, les branches d'encliquetage (21) de l'élément d'encliquetage (3) pressent avec une force de ressort (F_{F}) contre le bord d'ouverture de l'ouverture de montage (33).

5. Clip de fixation selon l'une quelconque des revendications 3 ou 4, **caractérisé en ce que** les moyens de déverrouillage (25), lorsque l'élément d'encliquetage (3) est monté, font saillie latéralement au-delà de l'écran de protection (19) par un surdimensionnement de consigne (a).

6. Clip de fixation selon la revendication 5, **caractérisé en ce que** dans le cas d'un encliquetage défectueux de l'élément d'encliquetage (3) dans la paroi de support (31), les moyens de déverrouillage (25) font saillie au-delà de l'écran de protection (19) avec un surdimensionnement (b), qui se distingue du surdimensionnement de consigne (a).

7. Clip de fixation selon l'une quelconque des revendications 2 à 6, **caractérisé en ce que** les moyens de déverrouillage (25) présentent un insert d'outil, par exemple un oeillet de démontage, qui recouvre au moins en partie de préférence l'écran de protection (19) en cas d'encliquetage défectueux, et sont détachés de l'écran de protection (19) en cas d'encliquetage correct.

8. Clip de fixation selon l'une quelconque des revendications précédentes, **caractérisé en ce que** l'élément d'encliquetage (3) présente au moins une butée du côté avant (29), entre laquelle et l'élément d'encliquetage (3) est serré le bord d'ouverture de l'ouverture de montage (33).

9. Clip de fixation selon la revendication 8, **caractérisé en ce que** la butée (29) de l'élément d'encliquetage (3) conjointement avec les moyens de déverrouillage (25) de l'élément d'encliquetage (3) est au moins en partie recouverte par l'écran de protection (19).

10. Clip de fixation selon l'une quelconque des revendications précédentes, **caractérisé en ce que** l'écran de protection (19) est réalisé sous forme de patte (19) venue de matière et d'une seule pièce avec l'étrier de retenue (1).

11. Clip de fixation selon l'une quelconque des revendications précédentes, **caractérisé en ce que** les brides de fixation (11, 13) présentent des ouvertures en regard (15) à travers lesquelles peut être guidé l'élément d'encliquetage (3).

12. Clip de fixation selon la revendication 11, **caractérisé en ce que** le module d'airbag (9) présente une patte de fixation (10) qui est serrée entre les brides de fixation (11, 13) de l'étrier de retenue (1) et à travers laquelle est guidé l'élément d'encliquetage (3).

13. Clip de fixation selon l'une quelconque des revendications précédentes, **caractérisé en ce que** l'étrier de retenue (1) présente un point destiné à la rupture (37), qui se déchire lors de l'activation du module d'airbag (9).

14. Clip de fixation selon l'une quelconque des revendications précédentes, **caractérisé en ce que** le module d'airbag (9) est un module d'airbag pour la tête.

15. Procédé de fixation d'un module d'airbag (9) sur une paroi de support (31) d'un véhicule avec un clip de fixation selon l'une quelconque des revendications précédentes, dans lequel procédé une patte de fixation (10) du module d'airbag (9) est disposée entre deux brides de fixation (11, 13) d'un étrier de retenue (1), un élément d'encliquetage (3) étant guidé à travers les brides de fixation (11, 13) et la patte de fixation (10), et l'élément d'encliquetage (3) conjointement avec l'étrier de retenue (1) étant encliqueté dans une ouverture de montage (33) d'une paroi de support (31) du côté du véhicule.
